# EUROPÄISCHE PATENTSCHRIFT

(11) **EP 3 030 528 B1**
(45) Veröffentlichungstag und Bekanntmachung des Hinweises auf die Patenterteilung: **21.07.2021**
(21) Anmeldenummer: 14750174.6
(22) Anmeldetag: 04.08.2014
(51) Int. Cl.: C03C 8/14, C03C 8/18, C03C 8/20

(54) **EMAILLEPULVER, METALLBAUTEIL MIT EINEM MIT EINER EMAILLEBESCHICHTUNG VERSEHENEN FLÄCHENABSCHNITT UND VERFAHREN ZUM HERSTELLEN EINES SOLCHEN METALLBAUTEILS**
ENAMEL POWDER, METAL COMPONENT HAVING A SURFACE PORTION PROVIDED WITH AN ENAMEL COATING AND METHOD FOR PRODUCING SUCH A METAL COMPONENT
POUDRE D'ÉMAILLAGE, COMPOSANT MÉTALLIQUE POSSÉDANT UNE PORTION DE SURFACE DOTÉE D'UN REVÊTEMENT ÉMAILLÉ ET PROCÉDÉ DE FABRICATION D'UN TEL COMPOSANT MÉTALLIQUE

(30) Priorität: 05.08.2013 DE 102013108428
(43) Veröffentlichungstag der Anmeldung: 15.06.2016
(73) Patentinhaber: Nemak, S.A.B. de C.V., 66000 García, Nuevo León (MX)
(72) Erfinder: GOSCH, Rolf, A-4600 Thalheim bei Wels (AT); KÜHN, Wolfgang, 08315 Lauter-Bernsbach (DE); BRETSCHNEIDER, Annett, 08297 Zwönitz (DE)
(74) Vertreter: Cohausz & Florack
(86) Internationale Anmeldenummer: PCT/EP2014/066735
(87) Internationale Veröffentlichungsnummer: WO 2015/018795

(56) Entgegenhaltungen:
- EP-A2- 0 362 136
- DE-A1-102006 043 535
- DATABASE WPI Week 198110 Thomson Scientific, London, GB; AN 1981-16311D XP002731279, -& JP S55 167152 A (MATSUSHITA ELECTRIC WORKS LTD) 26. Dezember 1980 (1980-12-26)
- DATABASE WPI Week 199938 Thomson Scientific, London, GB; AN 1999-452833 XP002731280, -& JP H11 189431 A (IKEBUKURO HORO KOGYO CO LTD) 13. Juli 1999 (1999-07-13)
- None

## Beschreibung

Die Erfindung betrifft ein Emaillepulver, ein Metallbauteil mit einem Flächenabschnitt, der mit einer Emaillebeschichtung versehen ist, und ein Verfahren zum Herstellen von solchen Metallbauteilen.

Wie im Einzelnen im Artikel "Möglichkeiten und Grenzen der Emaillierung von Leichtmetallen" von Dr.-Ing. Wolfgang Kühn, erschienen in Oberflächen Polysurfaces No 2/09, Seiten 6 - 9, erläutert, gewinnt neben der seit Jahrhunderten bekannten Möglichkeit der Emaillierung von Bauteilen aus Stahl und Kupfer seit Mitte des letzten Jahrhunderts auch die Emaillierung von Bauteilen aus Leichtmetallen, wie Aluminium, Magnesium und Titan, zunehmend an Bedeutung. Hierbei steht aus technischer Sicht der Schutz der Bauteiloberflächen vor korrosiven Angriffen im Vordergrund.

Wie im genannten Artikel weiter ausgeführt, handelt es sich bei Emaillebeschichtungen um Glasschichten, die vor allem hinsichtlich der Schmelztemperatur und der thermischen Ausdehnungskoeffizienten an die für sie vorgesehenen Trägerwerkstoffe angepasst wurden. Sie verbinden die Eigenschaften einer Glasoberfläche mit den Material- und Verarbeitungseigenschaften von Metallen. Im Gegensatz zu anderen Beschichtungen verbindet sich beim Einbrand der jeweiligen Emaillebeschichtung ein Glas-Metall-Verbund, bei dem sich zwischen dem Glasmaterial und dem Metallsubstrat Zwischenschichten, so genannte intermetallische Phasen, bilden. Diese sichern eine besonders intensive Haftung der Beschichtung auf dem Metall. Zu diesem Zweck sind moderne Emaillen heute Mehrstoffgemische, die unter Nutzung ihres Eutektikums bei niedrigen Einbrenntemperaturen eine sehr gute mechanische Härte und chemische Beständigkeit erreichen. Dabei sind emaillierte Werkstücke zum Beispiel durch Biegen, Sägen oder Bohren bearbeitbar und können zusätzlich mit funktionellen, nanoskaligen Sol-Gel-Schichten versehen werden, um beispielsweise die harte, kratzfeste Emailleschicht um einen temperaturbeständigen Antihafteffekt zu ergänzen.

Das Dokument JPS55167152 beschreibt ein Emaillepulver zur Herstellung einer Emaillebeschichtung, wobei das Emaillepulver als Mischung vorliegt, die 100 Gewichtsteile eines Niedrigschmelztemperatur Glaspulvers und 5 bis 20 Gewichtsteile keramische Fasern, Glasfasern oder Kohlefasern, enthält. Die Verglasung bei 550-700 °C des besagten Emaillepulver ergibt eine Emaillierung mit guter mechanischer Härte.

Aus der DE 10 2010 025 286 A1 ist es des Weiteren bekannt, dass sich die Innenflächen von Abgaskanälen von Leichtmetallgussteilen, wie beispielsweise Zylinderköpfen, für Verbrennungsmotoren, dadurch effektiv gegen eine thermische Überbeanspruchung schützen lassen, dass sie zumindest abschnittsweise mit einer Beschichtung .belegt werden, die aus einem Glasmaterial gebildet ist. Bei der praktischen Nutzung dieses Vorschlags ergibt sich eine besondere Herausforderung dadurch, dass die Beschichtung einerseits den im Betrieb auftretenden mechanischen und thermischen Belastungen sicher standhalten muss und andererseits eine mechanische Bearbeitung von an den beschichteten Flächenabschnitt angrenzenden Abschnitten des jeweiligen Bauteils ohne die Gefahr eines Abplatzens der Beschichtung zulassen muss.

Vor dem Hintergrund des voranstehend erläuterten Standes der Technik bestand die Aufgabe der Erfindung darin, einen Beschichtungswerkstoff zu schaffen, der es erlaubt, auf einem Metallbauteil, insbesondere einem Leichtmetallbauteil, eine Beschichtung zu erzeugen, die auch hohe mechanische und thermische Belastungen sicher ertragen kann und sich dabei auch für eine mechanische Bearbeitung eignet. Darüber hinaus sollten ein Metallbauteil, das an mindestens einem Flächenabschnitt mit einer entsprechend beschaffenen Beschichtung versehen ist, und ein Verfahren zur Herstellung eines solchen Metallbauteils angegeben werden.

In Bezug auf den Beschichtungswerkstoff wird die oben genannte Aufgabe erfindungsgemäß durch ein Emaillepulver mit den in Anspruch 1 angegebenen Bestandteilen gelöst.

In Bezug auf das Metallbauteil besteht die Lösung der oben genannten Aufgabe darin, dass ein solches Metallbauteil die in Anspruch 5 angegebenen Merkmale aufweist.

In Bezug auf das Verfahren besteht die Lösung der oben genannten Aufgabe schließlich erfindungsgemäß darin, dass bei der Herstellung eines Metallbauteils, das mindestens einen mit einer Emaillebeschichtung versehenen Flächenabschnitt aufweist, die in Anspruch 11 angeführten Verfahrensschritte durchlaufen werden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Emaillepulver liegt als Mischung vor, die 100 Teile eines Glaspulvers, optional 10 - 22 Teile grobe Glaskörner, die größer sind als die Partikel des Glaspulvers und einen mittleren Korndurchmesser von 40 - 500 µm aufweisen, 0,1 - 7,5 Teile keramische Fasern, Glasfasern oder Kohlefasern, sowie alternativ zueinander oder in Kombination miteinander 10 - 21 Teile einer pulverförmig vorliegenden oxidischen Verbindung eines Leichtmetalls oder 1 - 5 Teile eines Pulvers eines Schwermetalls enthält.

Wenn hier, wie im Bereich der Emalliertechnik üblich, von "Teilen" als Dosiermaß die Rede ist, so wird darunter verstanden, dass die dem Emaillepulver zugegebene Menge an dem jeweiligen Bestandteil mithilfe eines für alle Bestandteile gleichen Einheitsmaß abgemessen wird und die erfindungsgemäß für die einzelnen Bestandteile jeweils vorgesehenen "Teile" das jeweilige Vielfache dieses Einheitsmaßes bezeichnen. Die hier verwendeten Angaben in "Teilen" sind daher Mengenangaben (d. h. keine Volumenangaben), die auf eine bestimmte, frei wählbare Gewichtseinheit, wie beispielsweise g oder kg, bezogen sind. Die jeweilige Gewichtseinheit kann in Abhängigkeit von der jeweils benötigten Gesamtmenge gewählt werden. Wenn nur kleine Mengen im Bereich von weniger als einem Kilogramm des erfindungsgemäßen Emaillepulvers benötigt werden, wird als Bezugseinheit "Gramm" gewählt. Es werden dann 100 g eines Glaspulvers, optional 10 - 22 g grobe Glaskörner, die größer sind als die Partikel des Glaspulvers, 0,1 - 7,5 g keramische Fasern, Glasfasern oder Kohlefasern, sowie alternativ zueinander oder in Kombination miteinander 10 - 21 g einer pulverförmig vorliegenden oxidischen Verbindung eines Leichtmetalls oder 1 - 5 g eines Pulvers eines Schwermetalls zu einer erfindungsgemäßen Emaille vermischt. Wird dagegen eine Menge in der Größenordnung von 500 kg benötigt, so kann jedem "Teil" der erfindungsgemäßen Emaillepulver-Rezeptur beispielsweise die Mengeneinheit "5 kg" zugeordnet werden. Erfindungsgemäß werden dann 500 kg eines Glaspulvers, optional 50 - 110 kg grobe Glaskörner, die größer sind als die Partikel des Glaspulvers, 0,5 - 37,5 kg keramische Fasern, Glasfasern oder Kohlefasern, sowie alternativ zueinander oder in Kombination miteinander 50 - 105 kg einer pulverförmig vorliegenden oxidischen Verbindung eines Leichtmetalls oder 5 - 25 kg eines Pulvers eines Schwermetalls zu einer erfindungsgemäßen Emaille vermischt.

Den einzelnen Bestandteilen des erfindungsgemäßen Emaillepulvers kommen dabei folgende Bedeutungen zu:

### a) Glaspulver

Das Glaspulver ist die Grundlage des erfindungsgemäßen Emaillepulvers und bildet bei der erfindungsgemäß beschaffenen, auf dem jeweiligen Flächenabschnitt des Metallbauteils erzeugten Emaillebeschichtung die Matrix, in der die anderen Bestandteile des Emaillepulvers eingelagert sind.

Als Glaspulver lassen sich die im Stand der Technik hierzu üblicherweise verwendeten Glassorten nutzen. Dabei eignen sich für die Erfindung Glaspulver aus Gläsern, die einen niedrigeren Ausdehnungskoeffizienten haben als das Trägermaterial, an dem der Flächenabschnitt vorhanden ist, der mit der durch das erfindungsgemäße Emaillepulver gebildete Emaillebeschichtung jeweils belegt werden soll. Um im Zuge des Einbrennens der Emaillebeschichtung eine Beschädigung oder Verformung des jeweiligen Metallsubstrats zu vermeiden, sollte das aus solchen Gläsern erzeugte Glaspulver bei einer Temperatur schmelzen, die niedriger ist als der Temperaturbereich, in dem die Schmelztemperatur des jeweiligen Trägermaterials liegt.

Typische in Frage kommende Schmelztemperaturen des Glaspulvers liegen bei Anwendung auf Flächenabschnitten von Leichtmetallbauteilen im Bereich von 480 - 650 °C, insbesondere 540 - 580 °C oder 510 - 540 °C.

Bei Anwendungen an Flächen von Bauteilen, die aus Leichtmetall hergestellt sind, hat sich herausgestellt, dass eine auf Grundlage solcher Glaspulver erzeugte und im Übrigen erfindungsgemäß zusammengesetzte Emaillebeschichtung auch dann noch den thermischen und mechanischen Belastungen sicher standhält und das Leichtmetallsubstrat zuverlässig schützt, wenn die Temperatur, der das betreffende Bauteil im Betrieb an der mit der Emaillebeschichtung versehenen Fläche ausgesetzt ist, sehr viel höher liegt als die Schmelztemperatur des Leichtmetallwerkstoffs und der aus erfindungsgemäßem Emaillepulver erzeugten Beschichtung selbst. So eignet sich erfindungsgemäßes Emaillepulver insbesondere zum Beschichten von Flächen von aus Leichtmetallwerkstoff, insbesondere einem Aluminiumwerkstoff, hergestellten Bauteilen für Verbrennungsmotoren, die im Einsatz einem heißen Abgasstrom ausgesetzt sind. Bauteile dieser Art werden in der Praxis regelmäßig gießtechnisch hergestellt.

Erfindungsgemäßes Emaillepulver eignet sich jedoch nicht nur für die Beschichtung von heißen Gasströmen ausgesetzten Flächenabschnitten, sondern lässt sich auch zum Beschichten von an der Außenseite von Metallbauteilen liegenden Flächen nutzen. Bei im Betrieb auf hohe Temperaturen erwärmten Bauteilen kann die aus erfindungsgemäßem Emaillepulver gebildete Schicht zur Reduzierung von Hitzeabstrahlung dienen.

Genauso lassen sich mit erfindungsgemäßem Emaillepulver an Metallbauteilen Flächen beschichten, die nach der Beschichtung eine sehr glatte Oberfläche aufweisen sollen. Solche Flächen können beispielsweise im Bereich von fluiddurchströmten Kanälen von Metallbauteilen oder an anderen Bauteilabschnitten vorgesehen sein, die im Betrieb einem an ihnen entlang strömenden Fluid ausgesetzt sind.

Auch kann eine aus erfindungsgemäßem Emaillepulver erzeugte Beschichtung in einer aggressiven Umgebung die jeweils mit einer erfindungsgemäß erzeugten Emaille-Beschichtung versehene Fläche gezielt vor Korrosion schützen.

Die Körnung (mittlerer Durchmesser) der Partikel des die Basis eines erfindungsgemäßen Emaillepulvers bildenden Glaspulvers liegt typischerweise im Bereich von 5 - 40 µm, wobei sich Glaspulver mit einer Korngröße, die im Mittel 25 µm beträgt, in der Praxis als besonders geeignet herausgestellt haben.

### b) Grobe Glaskörner

10 - 22 Teile grobe Glaskörner können einem erfindungsgemäßen Emaillepulver optional zugegeben werden, um der aus einem erfindungsgemäßen Emaillepulver erzeugten Emaillebeschichtung eine weiter verbesserte Beständigkeit gegen Rissbildung zu verleihen. Als "grobe Glaskörner" werden dabei solche Glaspartikel bezeichnet, die größer sind als die größten Partikel des Glaspulvers, das die Basis eines erfindungsgemäßen Emaillepulvers bildet. Typischerweise zählen hierzu somit Glaskörner mit einem mittleren Durchmesser von mehr als 40 µm. Dabei sollte der mittlere Durchmesser der groben Glaskörner 500 µm nicht überschreiten, um einer zu starken Vergröberung der mit einem erfindungsgemäßen Emaillepulver erfindungsgemäß erzeugten Beschichtung vorzubeugen.

Aufgrund ihres vergleichbar großen Volumens schmelzen die groben Glaskörner beim Einbrennen der Emaillebeschichtung nicht vollständig, sondern bleiben in ihrer Grundstruktur erhalten. Bilden sich im praktischen Gebrauch in der Emaillebeschichtung Risse, so stellen sich die in der Emaillebeschichtung erfindungsgemäß vorhandenen Glaskörner der weiteren Ausdehnung der Risse nach Art einer Barriere entgegen, die vom jeweiligen Riss nicht überwunden werden kann. Auf diese Weise wird dem Fortschreiten des Risses wirksam entgegengewirkt und eine weitergehende Beschädigung der Beschichtung verhindert.

Als grobe Glaskörner können Glasteile verwendet werden, die zusammengesetzt sind wie ein erfindungsgemäßes Emaillepulver. Die aus einem solchen Emaillepulver hergestellten groben Glaskörner weisen dann eine Zusammensetzung und Eigenschaften auf, die der Zusammensetzung und den Eigenschaften einer aus dem erfindungsgemäßen Emaillepulver erzeugten Beschichtung entsprechen. Auf diese Weise ist sichergestellt, dass die erfindungsgemäß erzeugte Beschichtung trotz der Anwesenheit der groben Glaskörner weitestgehend homogene Eigenschaften und ein ebenso gleichmäßiges Verhalten besitzt. Als für ein erfindungsgemäßes Emäillepulver besonders geeignet haben sich solche groben Glaskörner erwiesen, die beim im Zuge der Herstellung von erfindungsgemäßem Emaillepulver bereits als Fritte zugegeben werden. Solche gefritteten, d. h. nicht ganz durchgeschmolzenen Glaskörner haben sich in Bezug auf die Vermeidung größerer Rissbildung in durch das erfindungsgemäße Emaillepulver erzeugten Emaillebeschichtungen als besonders effektiv erwiesen.

Damit die Wirkung der groben Glaskörner mit der gewünschten Zuverlässigkeit eintritt, enthält das erfindungsgemäße Emaillepulver 10 - 22 Teile an diesen Glaskörnern, wobei sich eine optimale- Wirkung einstellt, wenn mindestens 15 Teile grobe Glaskörner dem erfindungsgemäßen Emaillepulver zugegeben werden.

### c) Keramische Fasern, Glasfasern oder Kohlefasern

Den in einem erfindungsgemäßen Emaillepulver vorhandenen Fasern kommt eine besondere Bedeutung zu. Sie stellen sicher, dass eine aus dem erfindungsgemäßen Pulver gebildete Emaillebeschichtung auch unter den hohen Spannungen sicher zusammenhält, die sich durch die im praktischen Einsatz auftretenden Temperaturschwankungen und mechanischen Druckbelastungen ergeben können.

Um diese Funktion zu erfüllen, sind in einem erfindungsgemäßen Emaillepulver 0,1 - 7,5 Teile, insbesondere mindestens 2 Teile oder mindestens 3,5 - 7,5 Teile, an keramischen Fasern, Glasfasern oder Kohlefasern vorhanden, wobei die keramischen Fasern, Glasfasern und die Kohlefasern jeweils alleine oder auch als Mischung zugegeben werden können. Optimale Wirkungen ergeben sich dann, wenn 4 - 6 Teile an Fasermaterial in dem erfindungsgemäßen Pulver vorhanden sind.

Grundsätzlich kommen für das erfindungsgemäße Emaillepulver keramische Fasern, Glasfasern oder Kohlenstofffasern mit einer Faserlänge von 10 - 9000 µm in Frage. Dabei erweist sich eine große Faserlänge als günstig in Bezug auf den Zusammenhalt der aus einem erfindungsgemäßen Emaillepulver gebildeten Emaillebeschichtung, kann jedoch die Verarbeitbarkeit beeinträchtigen. Bei einer Faserlänge von weniger als 10 µm ist die verstärkende Wirkung zu schwach. Als ausreichend wirksam und gleichzeitig eine gute Verarbeitbarkeit gewährleistend haben sich Fasern erwiesen, die eine Länge von 10 - 1000 µm besitzen.

Als Kohlefasern können handelsübliche Fasern zum Einsatz kommen. Gleiches gilt für die keramischen Fasern und Glasfasern, wobei hier beispielhaft SiC-Fasern oder Glasfasern unterschiedlicher Zusammensetzung zu nennen sind.

### d) Oxidische Verbindungen eines Leichtmetalls oder Pulver eines Schwermetalls

Pulverförmig vorliegende oxidische Verbindungen eines Leichtmetalls oder Pulver eines Schwermetalls können gleichzeitig oder alternativ im erfindungsgemäßen Emaillepulver vorhanden sein, um den Schmelzpunkt der aus dem Emaillepulver gebildeten Beschichtung in Bereiche zu verschieben, die im Hinblick auf den jeweiligen Einsatzzweck unkritisch sind.

Auf diesem Weg lassen sich auch an Leichtmetallbauteilen Emaillebeschichtungen erzeugen, die bei im Hinblick auf die Schmelztemperatur des jeweiligen Leichtmetallwerkstoffs unkritischen Einbrennbedingungen entstehen, im praktischen Einsatz jedoch so temperaturbeständig sind, dass sie den dabei auftretenden Maximaltemperaturen sicher standhalten.

Um diesen Effekt zu erreichen, enthält ein erfindungsgemäßes Emaillepulver 10 - 21 Teile, insbesondere 12 - 17 Teile, einer pulverförmig vorliegenden oxidischen Verbindung eines Leichtmetalls und/oder 1 - 5 Teile, insbesondere 2 - 4 Teile, eines Pulvers eines Schwermetalls.

Als "Leichtmetalle" werden im vorliegenden Text Metalle mit einer Dichte von weniger als 5 g/cm³ verstanden, nämlich Al, Ti und Mg.

Aufgrund ihres hohen Schmelzpunkts von mehr als 2000 °C eignen sich von den Oxiden dieser Leichtmetalle insbesondere Al-Oxide für die Verwendung in einem erfindungsgemäßen Emaillepulver. Jedoch können insbesondere bei einer Beschichtung von Leichtmetallbauteilen auch andere Leichtmetall-Oxid-Pulver, wie Pulver aus Ti-Oxid und desgleichen, zum Einsatz kommen, deren Schmelzpunkt jeweils immer noch mehr als 1000 °C beträgt und damit deutlich über dem Schmelztemperaturbereich des Leichtmetallsubstrats liegt.

Optimale Einflüsse der jeweils vorgesehenen Leichtmetalloxide auf die Eigenschaften einer aus dem erfindungsgemäßen Emaillepulver erzeugten Emaillebeschichtung stellen sich dann ein, wenn die Leichtmetalloxide in Mengen von bis zu 30 % bezogen auf die Menge des aus dem Emaillepulver gebildeten amorphen Beschichtungsmaterials vorhanden sind.

Als "Schwermetall" werden hier alle Metalle und deren Legierungen angesehen, die eine Dichte von mindestens 5 g/cm³ besitzen, nämlich Metallpulver aus legierten Stählen. Metallpulver, die aus Edelstahl, wie beispielsweise aus den unter den Bezeichnungen "V2A" und "V4A" bekannten, unter den Werkstoffnummern 1.4301 und 1.4401 genormten Stählen X5CrNi18-10 und X5CrNiMo17-12-2 bestehen, haben sich als besonders geeignet herausgestellt. Auch hier erweist es sich als vorteilhaft, wenn der Schmelzpunkt des jeweiligen Metallpulvers mehr als 1000 °C beträgt, damit es zu keiner Veränderung der Eigenschaften des Metallpulvers während des Einbrennens kommt.

Optimale Einflüsse des Metallpulvers auf die Eigenschaften einer aus dem erfindungsgemäßen Emaillepulver erzeugten Emaillebeschichtung stellen sich dann ein, wenn die Metallpulver der schweren Metalle oder deren Legierungen in Mengen von bis zu 10 % bezogen auf die Menge des amorphen Beschichtungsmaterials vorhanden sind.

Der mittlere Durchmesser der dem erfindungsgemäßen Emaillepulver zugegebenen Körner des jeweiligen Metallpulvers oder der jeweils pulverförmigen Oxide eines Leichtmetalls sollte typischerweise im Bereich von 10 - 500 µm liegen.

### e) Weitere Bestandteile

Neben den voranstehend erläuterten Bestandteilen können im erfindungsgemäßen Emaillepulver optional selbstverständlich weitere Hilfsstoffe vorhanden sein, wie sie zur Herstellung einer Emailleschicht typischerweise benötigt werden. Hierzu zählen z. B. Borsäure, Kalilauge, Wasserglas oder demineralisiertes Wasser.

Das erfindungsgemäße Emaillepulver kann dadurch hergestellt werden, dass die einzelnen Bestandteile in den angegebenen Mengen miteinander vermischt und gemeinsam vermahlen werden, bis ein einheitliches Pulver erhalten ist. Die groben Glaskörner können dabei dem Mahlgut so spät zugegeben werden, dass sie bis zum Ende des Mahlprozesses nicht vollständig zermahlen werden, sondern im fertig gemahlenen Pulver noch in der erfindungsgemäß geforderten Größe vorhanden sind. Ebenso können auch die Fasern dem Mahlgut während des Mahlvorgangs erst zu einem späteren Zeitpunkt zugegeben werden, damit auch sie nicht vollständig zermahlen werden, sondern am Ende des Mahlprozesses in der geforderten Länge vorliegen.

Alternativ kann das erfindungsgemäße Emaillepulver auch aus separat mit der jeweils geforderten Körnung vorgefertigten Bestandteilen gemischt werden.

Unter Ausnutzung der voranstehend erläuterten Eigenschaften einer aus einem erfindungsgemäßen Emaillepulver erzeugten Emaillebeschichtung weist ein erfindungsgemäßes Metallbauteil einen Flächenabschnitt auf, der zum Schutz gegen die thermischen und mechanischen Belastungen, denen er im praktischen Einsatz ausgesetzt ist, mit einer Emaillebeschichtung belegt ist, die aus einem erfindungsgemäßen Emaillepulver gebildet ist. Insbesondere erweist sich die Erfindung dabei als vorteilhaft für solche Metallbauteile, bei denen die jeweilige erfindungsgemäß beschichtete Fläche aufgrund einer Anströmung durch ein heißes Gas, insbesondere ein Abgas eines Verbrennungsmotors, hohe thermische und mechanische Belastungen ertragen muss.

Bei der erfindungsgemäß erzeugten und zusammengesetzten Beschichtung handelt es sich um ein anorganisches, nichtmetallisches amorphes Material, das in Folge seiner Bestandteile bei wechselnden thermischen und mechanischen Belastungen eine hohe Beständigkeit besitzt. Dabei ist selbst dann, wenn sich in der Beschichtung kleinere Risse bilden, aufgrund der Anwesenheit der gröberen Glaspartikel sichergestellt, dass es zu keiner größeren Rissausbildung kommt und die Beschichtung auf dem jeweiligen Flächenabschnitt haften bleibt. Gleichzeitig stellen die in der erfindungsgemäß vorgesehenen Emaillebeschichtung vorhandenen Fasern sicher, dass die Emaillebeschichtung auch unter hohen Spannungen zusammenhält.

Eine erfindungsgemäß beschaffene Emaillebeschichtung weist in Folge ihrer Bestandteile grundsätzlich eine höhere Druck- als Zugfestigkeit auf. Daher lässt sich die Neigung zur Rissbildung und zum Abplatzen der Emaillebeschichtung von dem jeweils mit ihr belegten Flächenabschnitt dadurch weiter minimieren, dass die Zusammensetzung des Emaillepulvers innerhalb der erfindungsgemäß vorgegebenen Grenzen so eingestellt wird, dass der Ausdehnungskoeffizient der Emaillebeschichtung niedriger ist als der Ausdehnungskoeffizient des Metallbauteils in dem Flächenabschnitt, der mit der Emaillebeschichtung belegt ist.

Besonders geeignet ist das erfindungsgemäße Emaillepulver zur Erzeugung einer Emaillebeschichtung auf einem Metallbauteil, das aus Leichtmetall oder einer Leichtmetalllegierung besteht. Dies gilt insbesondere für solche Metallbauteile, die gießtechnisch hergestellt sind. So lassen sich in erfindungsgemäßer Weise insbesondere Flächenabschnitte von Leichtmetallgussteilen, insbesondere Aluminiumgussteilen, beschichten. Eine aus wirtschaftlicher und technischer Sicht besonders wichtige Verwendung von Emaillebeschichtungen der erfindungsgemäßen Art ist dabei die Beschichtung von Flächenabschnitten an Leichtmetallgussteilen, die für den Bau von Verbrennungsmotoren bestimmt sind. Hierzu zählen beispielsweise die Innenflächen von abgasführenden Kanälen von Zylinderköpfen, Turboladergehäusen und desgleichen.

Das erfindungsgemäße Verfahren zum Herstellen eines erfindungsgemäßen Metallbauteils umfasst allgemein folgende Arbeitsschritte:
- Bereitstellen des Metallbauteils,
- Auftragen eines unter Verwendung eines erfindungsgemäßen Emaillepulvers und einem Schlickermittel gebildeten Emailleschlickers auf den jeweils zu beschichtenden Flächenabschnitt des Metallbauteils, und
- Erzeugen der Emaillebeschichtung durch Einbrennen der Emailleschlicker bei einer Temperatur, die niedriger ist als die Schmelztemperatur des Werkstoffs, aus dem das Metallbauteil besteht.

Als Schlickermittel kommt beispielsweise demineralisiertes Wasser in Frage. Darüber hinaus können in dem Emailleschlicker als Stellmittel weitere Additive, wie beispielsweise Magnesiumchlorid, Natriumnitrit, Borsäure, Kalilauge oder Wasserglas, vorhanden sein.

Der Auftrag des Schlickers auf die jeweils zu beschichtende Fläche erfolgt beispielsweise durch Spritzen, Fluten oder Aufstreichen. Für den Auftrag der Emailleschicht auf die Innenflächen von engen Kanälen, Ausnehmungen und Höhlungen eignet sich insbesondere das Fluten. Dies gilt beispielsweise für enge Abgaskanäle, wie sie in Bauteilen für Verbrennungsmotoren anzufinden sind. Die Schichtdicke kann dabei auf den jeweiligen Anwendungsfall abgestimmt werden. So kann sie erforderlichenfalls mehr als 0,5 mm betragen, insbesondere im Bereich von bis zu 1 mm liegen. Für die sich in der Praxis stellenden Anforderungen haben sich beispielsweise Schichtdicken von 300 - 600 µm als ausreichend erwiesen. Bei hohen thermischen oder mechanischen Belastungen kann es jedoch günstig sein, wenn größere Schichtdicken vorgesehen werden, um das jeweilige Metallsubstrat ausreichend gegen die Einwirkung des anströmenden Heißgases zu schützen. In solchen Fällen können mehr als 0,6 mm dicke Emaillebeschichtungen, insbesondere solche, die bis zu 0,75 mm, bis zu 1 mm, bis zu 1,5 mm oder bis zu 2 mm dick sind, zweckmäßig sein.

Beschichtungen mit größeren Schichtdicken von 150 µm und mehr können durch Auftrag von zwei oder mehr Schichten gebildet werden, wobei die einzelnen Schichten in jeweils einem Durchlauf aufgetragen werden können. Dabei kann ein Schichtaufbau gebildet werden, dessen oberste Deckschicht aus erfindungsgemäßem Emaille-Pulver gebildet ist, während zwischen der Deckschicht ein oder mehrere Schichten vorhanden sind, die aus einer für diese Zwecke im Stand der Technik bereits eingesetzten Grundemaille bestehen. Die aus erfindungsgemäßem Emaille-Pulver bestehende Deckschicht bildet dann als Funktionsschicht den äußeren Abschluss der Gesamtbeschichtung.

Um eine optimale Haftung der Emaillebeschichtung auf dem jeweiligen Flächenabschnitt des Metallbauteils zu gewährleisten, kann der mit der Emaillebeschichtung zu belegende Flächenabschnitt des Metallbauteils vor dem Auftrag des Emailleschlickers einer Oberflächenbehandlung unterzogen werden, bei der der Flächenabschnitt entfettet und passiviert sowie eine auf dem Flächenabschnitt vorhandene oberflächennahe Oxidschicht aufgebrochen wird. Das Aufbrechen der Oxidschicht kann beispielsweise durch Strahlen, mechanisches Aufrauen und desgleichen erfolgen.

Soll die erfindungsgemäße Emaillebeschichtung auf einem Leichtmetallbauteil erzeugt werden, so erfolgt das Einbrennen optimalerweise bei noch feuchter, nicht vollständig abgetrockneter Emailleschlicker.

Das Einbrennen der Emaillebeschichtung wird bei Temperaturen durchgeführt, die jeweils niedriger als die Schmelztemperatur des Metallwerkstoffs ist, aus dem der jeweils zu beschichtende Flächenabschnitt besteht. Bei aus Aluminium gefertigten Bauteilen liegen geeignete Einbrenntemperaturen typischerweise im Bereich von 480 - 650 °C, insbesondere 510 - 540 °C.

Das Einbrennen kann als separater Arbeitsschritt durchgeführt werden und nimmt dabei jeweils nur eine kurze Zeit in Anspruch, da die aufgetragene Emailleschlickerschicht nur kurz auf die Einbrenntemperatur erwärmt werden muss, um das Aufschmelzen der Glasmatrix und die Anbindung an das Metallsubstrat zu ermöglichen.

Alternativ kann das Einbrennen auch in Kombination mit einem Wärmebehandlungsschritt erfolgen, dem das jeweilige Metallbauteil zur Einstellung seiner mechanischen oder sonstigen Eigenschaften unterzogen wird. Bei Aluminiumgussteilen oder anderen Leichtmetallgussteilen bietet sich hierzu beispielsweise ein in vielen Anwendungsfällen erforderliches Lösungsglühen an, bei dem das jeweilige Gussteil in dem für das Einbrennen passenden Temperaturbereich gehalten wird.

Der besondere Vorteil der erfindungsgemäß erzeugten Emaillebeschichtung besteht darin, dass ein derart beschichtetes Metallbauteil nach dem Einbrennen der Emailleschlicker im Bereich des mit der erhaltenen Emaillebeschichtung versehenen Flächenabschnitts einer mechanischen Bearbeitung unterzogen werden kann, ohne dass es zur Zerstörung der Emaillebeschichtung kommt.

Nachfolgend wird die Erfindung anhand einer ein Ausführungsbeispiel darstellenden Zeichnung näher erläutert.

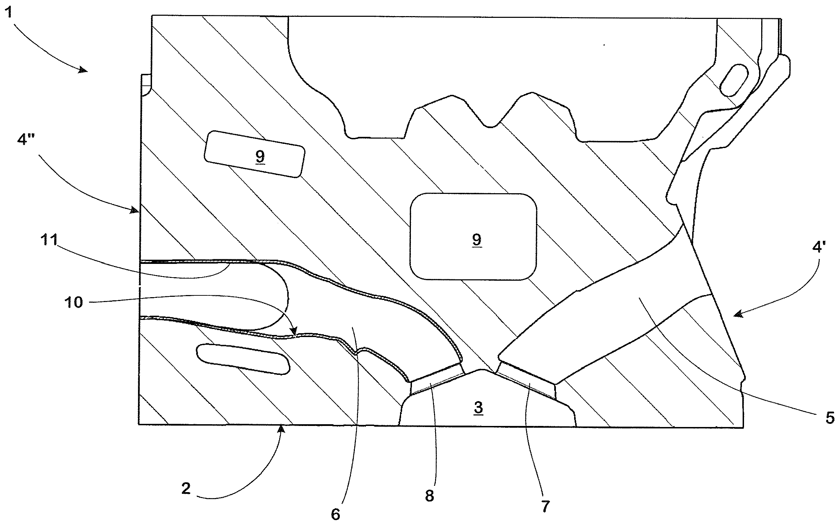

Die einzige Figur zeigt einen Ausschnitt eines Zylinderkopfs in einem quer zur Längserstreckung des Zylinderkopfs ausgerichteten Schnitt.

Der aus einem für diese Zwecke üblicherweise verwendeten Aluminiumgusswerkstoff, beispielsweise einer AlSi 11-Legierung, gegossene Zylinderkopf 1 für einen Otto- oder Dieselmotor weist eine ebene Anlagefläche 2 auf, mit der er bei Gebrauch über eine gegebenenfalls zwischengelegte, hier nicht gezeigte Zylinderkopfdichtung auf einem hier ebenfalls nicht dargestellten Motorblock des jeweiligen Verbrennungsmotors liegt. Der Verbrennungsmotor weist dabei in Reihe angeordnete Verbrennungsräume und darin auf und ab bewegte, hier ebenfalls nicht sichtbare Kolben auf.

In die Anlagefläche 2 sind der Anzahl der Zylinder des Verbrennungsmotors entsprechend viele kalottenartig ausgebildete Ausnehmungen 3 eingeformt, die den in Hubrichtung der Kolben des Verbrennungsmotors oberen Abschluss der Verbrennungsräume des Verbrennungsmotors bilden.

In den Ausnehmungen 3 mündet jeweils ein von der einen Längsseite 4' des Zylinderkopfes 1 herangeführter Einlasskanal 5, über den im Betrieb das jeweilige Brennstoff-Luft-Gemisch in den Brennraum eingelassen wird. Gleichzeitig geht von der jeweiligen Ausnehmung 3 ein Abgaskanal 6 ab, der zur gegenüberliegenden Längsseite 4" des Zylinderkopfes 1 geführt ist und über den das beim Verbrennungsvorgang anfallende Abgas aus dem Brennraum des Verbrennungsmotors abgeführt wird. Die Mündung 7 des Einlasskanals 5 und die Eingangsöffnung 8 des Abgaskanals 6 werden in Abhängigkeit vom Fortschritt des Verbrennungsprozesses in an sich bekannter Weise durch jeweils ein Ventil freigegeben bzw. verschlossen, die hier der Übersichtlichkeit halber nicht dargestellt sind.

Um die im Betrieb in Folge des Verbrennungsprozesses anfallende Wärme abzuführen, ist der Zylinderkopf 1 in an sich ebenfalls bekannter Weise von Kühlkanälen 9 durchzogen, durch die im Betrieb Kühlflüssigkeit strömt.

Die den Abgaskanal 6 umgrenzenden Innenflächen 10 des Abgaskanals 6 sind im Betrieb insbesondere in dem an seine Eingangsöffnung 8 anschließenden Bereich hohen thermischen und mechanischen Belastungen durch das bei geöffneter Eintrittsöffnung mit hoher Strömungsgeschwindigkeit in den Abgaskanal 6 einströmende heiße Abgas ausgesetzt.

Zum Schutz gegen diese Belastungen sind die Innenflächen 10 mit einer dünnen Emaillebeschichtung 11 belegt, deren Dicke im Mittel 400 µm beträgt und die die Innenflächen 10 über die gesamte Länge des Abgaskanals 6 bedeckt.

Die Emaillebeschichtung 11 ist entsprechend der gewünschten Schichtdicke in einem oder mehreren Durchläufen durch Einbrennen einer oder mehrerer aus Emailleschlicker bestehenden Schicht(en) gebildet worden, die durch Fluten des Abgaskanals 6 mit Emailleschlicker auf die Innenfläche 10 mit einer Dicke von 180 µm aufgetragen und anschließend im noch feuchten Zustand bei einer 520 °C betragenden Einbrenntemperatur zu der Emaillebeschichtung gebrannt worden ist. Die so erhaltene Emailleschicht hat dann eine Dicke von beispielsweise ca. 120 µm.

Zur Herstellung des Emailleschlickers sind
- 100,0: Teile Glaspulver, dessen Glaspartikel einen mittleren Durchmesser von 25 µm aufwiesen,
- 20,0: Teile grobe Glaskörner mit einem mittleren Durchmesser von 100 µm,
- 0,5: Teile Kohlenstofffasern mit einer durchschnittlichen Länge von 300 µm,
- 15,0: Teile Aluminiumoxid-Partikel mit einem mittleren Durchmesser von 100 µm und
- 3,0: Teile eines Pulvers aus dem Edelstahl V2A, wobei der mittlere Durchmesser der Partikel des Edelstahlpulvers im Mittel 50 µm betrug,
miteinander zu einem Emaillepulver vermischt und anschließend mit 38,0 Teilen demineralisiertem Wasser zu dem Emailleschlicker verarbeitet worden. Die einzelnen Komponenten sind dazu beispielsweise gemeinsam miteinander vermahlen worden, wobei durch Wahl des Zeitpunkts der Zugabe der jeweiligen Komponente unter Berücksichtigung der Materialeigenschaften die Korngröße bestimmt wurde, die die jeweilige Komponente am Ende des Mahlvorgangs aufwies.

Dem durch Fluten erfolgenden Auftrag des so zusammengesetzten Emailleschlickers ist eine Oberflächenbehandlung vorangegangen, bei der die Innenflächen 11 thermisch oder chemisch entfettet , anschließend chemisch passiviert worden sind und bei der zusätzlich durch gezieltes Aufrauen der Innenflächen 11 die Oxidschicht aufgebrochen worden ist, die sich dort in Folge des Kontakts des Al-Gussmaterials des Zylinderkopfs 1 mit dem Umgebungssauerstoff gebildet hat.

### BEZUGSZEICHEN

- 1: Zylinderkopf
- 2: Anlagefläche
- 3: Brennraum-Ausnehmung
- 4',4": Längsseiten
- 5: Einlasskanal
- 6: Abgaskanal
- 7: Mündung des Einlasskanals 5
- 8: Eingangsöffnung des Abgaskanals 6
- 9: Kühlkanäle
- 10: Innenflächen des Abgaskanals 6
- 11: Emaillebeschichtung

## Patentansprüche

1. Emaillepulver zum Erzeugen einer Emaillebeschichtung (11), wobei das Emaillepulver als Mischung vorliegt, die
- 100 Teile eines Glaspulvers,
- optional 10 - 22 Teile grobe Glaskörner, die größer sind als die Partikel des Glaspulvers, und einen mittleren Durchmesser von 40 - 500 µm besitzen,
- 0,1 - 7,5 Teile keramische Fasern, Glasfasern oder Kohlefasern mit einer Länge von 10 - 9000 µm,
- sowie alternativ zueinander oder in Kombination miteinander
- 10 - 21 Teile einer pulverförmig vorliegenden oxidischen Verbindung eines Leichtmetalls aus der Gruppe "Al, Ti, Mg" oder
- 1 - 5 Teile eines Pulvers eines legierten Stahls,
enthält.

2. Emaillepulver nach Anspruch 1, dad**u**rch **gekennzeichnet, dass** die oxidische Verbindung ein Leichtmetalls Aluminiumoxid ist.

3. Emaillepulver nach einem der voranstehenden Ansprüche, **dadurch gekennzeichnet, dass** die optional vorhandenen groben Glaskörner aus einem Glasmaterial bestehen, dessen Zusammensetzung und Eigenschaften der Zusammensetzung und den Eigenschaften einer aus dem Emaillepulver erzeugten Emaillebeschichtung entspricht.

4. Emaillepulver nach einem der voranstehenden Ansprüche, **dadurch gekennzeichnet, dass** der Schmelzpunkt der oxidischen Verbindung größer als 1000 °C ist.

5. Metallbauteil mit einem mit einer Emaille-Beschichtung versehenen Flächenabschnitt (10), **dadurch gekennzeichnet, dass** das Metallbauteil an dem Flächenabschnitt mit einer Emaillebeschichtung (11) belegt ist, die aus einem gemäß einem der Ansprüche 1 bis 4 zusammengesetzten Emaillepulver gebildet ist.

6. Metallbauteil nach Anspruch 5, **dadurch gekennzeichnet, dass** der Ausdehnungskoeffizient der Emaillebeschichtung (11) niedriger ist als der Ausdehnungskoeffizient des Metallbauteils in dem Flächenabschnitt (10), der mit der Emaillebeschichtung (11) belegt ist.

7. Metallbauteil nach einem der Ansprüche 5 oder 6, **dadurch gekennzeichnet, dass** es aus einer Leichtmetalllegierung besteht.

8. Metallbauteil nach einem der Ansprüche 5 bis 7, **dadurch gekennzeichnet**, das s der mit der Emaillebeschichtung (11) versehene Flächenabschnitt eine Innenfläche (10) eines Gaskanals (6) ist.

9. Metallbauteil nach den Ansprüchen 7 und 8, **dadurch gekennzeichnet, dass** es ein Zylinderkopf (1) für einen Verbrennungsmotor ist.

10. Metallbauteil nach einem der Ansprüche 5 bis 8, **dadurch gekennzeichnet, dass** der mit der Emaillebeschichtung (11) versehene Flächenabschnitt an der Außenseite des Metallbauteils vorhanden ist.

11. Verfahren zum Herstellen eines gemäß einem der Ansprüche 5 bis 10 ausgebildeten Metallbauteils umfassend folgende Arbeitsschritte:
- Bereitstellen des Metallbauteils,
- Auftragen eines Emailleschlickers, der unter Verwendung eines gemäß einem der Ansprüche 1 bis 4 zusammengesetzten Emaillepulvers und einem Schlickermittel gebildet ist, auf den zu beschichtenden Flächenabschnitt des Metallbauteils, und
- Erzeugen der Emaillebeschichtung (11) durch Einbrennen der Emailleschlicker bei einer Temperatur, die niedriger ist als die Schmelztemperatur des Werkstoffs, aus dem das Metallbauteil besteht.

12. Verfahren nach Anspruch 11, **dadurch gekennzeichnet, dass** das Einbrennen der Emailleschlicker im Zuge eines Wärmebehandlungsverfahrens erfolgt, dem das Metallbauteil zur Einstellung seiner mechanischen Eigenschaften unterzogen wird.

13. Verfahren nach einem der Ansprüche 11 oder 12, **dadurch gekennzeichnet, dass** das Metallbauteil nach dem Einbrennen der Emailleschlicker im Bereich des mit der erhaltenen Emaillebeschichtung (11) versehenen Flächenabschnitts einer mechanischen Bearbeitung unterzogen wird.

14. Verfahren nach einem der Ansprüche 11 - 13, **dadurch gekennzeichnet, dass** der mit der Emaillebeschichtung (11) zu belegende Flächenabschnitt des Metallbauteils vor dem Auftrag der Emailleschlicker einer Oberflächenbehandlung unterzogen wird, bei der der Flächenabschnitt entfettet und passiviert sowie eine auf dem Flächenabschnitt vorhandene oberflächennahe Oxidschicht aufgebrochen wird.

## Claims

1. Enamel powder for producing an enamel coating (11), wherein the enamel powder is present as a mixture which contains
- 100 parts of a glass powder,
- optionally 10 - 22 parts of coarse glass granulates which are larger than the glass powder particles, and which have an average diameter of 40 - 500 pm,
- 0.1 - 7.5 parts of ceramic fibres, glass fibres or carbon fibres with a length of 10 - 9000 µm,
- and alternatively to one another or in combination with one another
- 10 - 21 parts of a powdery oxidic compound of a light metal of the group "Al, Ti, Mg" or
- 1 - 5 parts of a powder of a alloyed steel.

2. Enamel powder according to Claim 1, **characterised in that** the oxidic compound of a light metal is aluminium oxide.

3. Enamel powder according to any one of the preceding claims, **characterised in that** the optionally present coarse glass granulates consist of a glass material, whose composition and properties corresponds to the composition and properties of an enamel coating produced from the enamel powder.

4. Enamel powder according to any one of the preceding claims, **characterised in that** the melting point of the oxidic compound is greater than 1000 °C.

5. Metal component having a surface section (10) provided with an enamel coating, **characterised in that** the metal component is coated with an enamel coating (11) on the surface section, this enamel coating (11) being formed from an enamel powder composed according to any one of Claims 1 to 4.

6. Metal component according to Claim 5, **characterised in that** the coefficient of expansion of the enamel coating (11) is lower than the coefficient of expansion of the metal component in the surface section (10) which is coated with the enamel coating (11) .

7. Metal component according to any one of the Claims 5 or 6, **characterised in that** it consists of a light metal alloy.

8. Metal component according to any one of Claims 5 to 7, **characterised in that** the surface section provided with the enamel coating (11) is an inner surface (10) of a gas duct (6).

9. Metal component according to either of Claims 7 and 8, **characterised in that** it is a cylinder head (1) for an internal combustion engine.

10. Metal component according to any one of Claims 5 to 8, **characterised in that** the surface section provided with the enamel coating (11) is on the outside of the metal component.

11. Method for producing a metal component formed according to any one of Claims 5 to 10, comprising the following production steps;
- providing the metal component,
- applying an enamel slip, which is formed using an enamel powder composed according to any one of Claims 1 to 4 and a slip means, to the surface section of the metal component to be coated and
- producing the enamel coating (11) by firing the enamel slip at a temperature which is lower than the melting temperature of the material of which the metal component consists.

12. Method according to Claim 11, **characterised in that** the enamel slip is fired in the course of a heat treatment process, to which the metal component is subjected in order to set its mechanical properties.

13. Method according to either of Claims 11 and 12, **characterised in that** the metal component after firing the enamel slip undergoes machining in the area of the surface section provided with the obtained enamel coating (11).

14. Method according to any one of Claims 11 to 13, **characterised in that** the surface section of the metal component to be coated with the enamel coating (11) before applying the enamel slip is subjected to a surface treatment, in which the surface section is degreased and passivated and a near-surface oxide layer present on the surface section is broken up.

## Revendications

1. Poudre d'émail pour produire un revêtement d'émail (11), la poudre d'émail se présentant sous la forme d'un mélange comprenant
- 100 parts d'une poudre de verre,
- optionnellement 10 à 22 parts de gros grains de verre plus gros que les particules de la poudre de verre, et ayant un diamètre moyen de 40 à 500 µm,
- 0,1 à 7,5 parts de fibres céramiques, de fibres de verre ou de fibres de carbone ayant une longueur de 10 à 9000 µm,
- ainsi qu'alternativement les uns aux autres ou en combinaison l'un avec l'autre
- 10 à 20 parts d'un composé oxydant en poudre d'un métal léger du groupe "Al, Ti, Mg" ou
- 1 à 5 parts d'une poudre d'un acier allié.

2. Poudre d'émail selon la revendication 1, **caractérisée en ce que** le composé oxydant d'un métal léger est un oxyde d'aluminium.

3. Poudre d'émail selon l'une des revendications précédentes,
**caractérisée en ce que** les gros grains de verre optionnellement présents consistent en un matériau de verre dont la composition et les propriétés correspondent à la composition et aux propriétés d'un revêtement d'émail produit à partir de la poudre d'émail.

4. Poudre d'émail selon l'une quelconque des revendications précédentes,
**caractérisée en ce que** le point de fusion du composé oxydant est supérieur à 1000°C.

5. Composant métallique ayant une section de surface (10) pourvue d'un revêtement d'émail,
**caractérisé en ce que** le composant métallique est revêtu au niveau de la section de surface d'un revêtement d'émail (11) formé d'une poudre d'émail composée selon l'une des revendications 1 à 4.

6. Composant métallique selon la revendication 5,
**caractérisé en ce que** le coefficient de dilatation du revêtement d'émail (11) est inférieur au coefficient de dilatation du composant métallique dans la section de surface (10) recouverte du revêtement d'émail (11).

7. Composant métallique selon l'une des revendications 5 ou 6,
**caractérisé en ce qu'**il est constitué d'un alliage de métaux légers.

8. Composant métallique selon l'une quelconque des revendications 5 à 7,
**caractérisé en ce que** la section de surface pourvue du revêtement d'émail (11) est une surface intérieure (10) d'un canal de gaz (6).

9. Composant métallique selon les revendications 7 et 8,
**caractérisé en ce qu'**il s'agit d'une culasse (1) pour un moteur à combustion.

10. Composant métallique selon l'une quelconque des revendications 5 à 8,
**caractérisé en ce que** la section de surface pourvue du revêtement d'émail (11) est présente sur la face extérieure du composant métallique.

11. Procédé de fabrication d'un composant métallique formé selon l'une des revendications 5 à 10, comprenant les étapes de travail suivantes :
- Mettre à disposition le composant métallique,
- Appliquer une bouillie d'émail sur la section de surface de l'élément métallique à revêtir, laquelle bouillie est formée en utilisant une poudre d'émail composée selon l'une des revendications 1 à 4 et un agent de bouillie, et
- Produire le revêtement d'émail (11) en cuisant la bouillie d'émail à une température inférieure à la température de fusion du matériau dont est fait le composant métallique.

12. Procédé selon la revendication 11,
**caractérisé en ce que** la cuisson de la bouillie d'émail est effectuée au cours d'un processus de traitement thermique auquel est soumis le composant métallique afin d'ajuster ses propriétés mécaniques.

13. Procédé selon l'une quelconque des revendications 11 ou 12,
**caractérisé en ce qu'**après que la bouillie d'émail a été cuite, le composant métallique est soumis à un traitement mécanique dans la région de la section de surface pourvue du revêtement d'émail obtenu (11).

14. Procédé selon l'une des revendications 11 à 13,
**caractérisé en ce que** la section de surface de la pièce métallique à recouvrir de la couche d'émail (11) est soumise à un traitement de surface avant l'application de la bouillie d'émail, dans lequel traitement la section de surface est dégraissée et passivée et une couche d'oxyde proche de la surface présente sur la section de surface est rompue.
